# EUROPEAN PATENT APPLICATION

(11) **EP 3 318 153 A1**
(43) Date of publication of application: **09.05.2018**
(21) Application number: 17199886.7
(22) Date of filing: 03.11.2017
(51) Int. Cl.: A43D 86/00, A43D 111/00, A43D 25/18

(54) **METHOD AND APPARATUS FOR JOINING A SOLE ELEMENT WITH AN UPPER ELEMENT**

(30) Priority: 04.11.2016 DE 102016221676
(71) Applicant: adidas AG, 91074 Herzogenaurach (DE)
(72) Inventor: KIRUPANANTHAM, Giridharan, 91074 Herzogenaurach (DE); DYCKMANS, Clemens Paul, 91074 Herzogenaurach (DE); JAUCH, Michael, 72639 Neuffen (DE); SCHILLING, Christian Albert, 72639 Neuffen (DE); MANN, Steffen, 72639 Neuffen (DE)
(74) Representative: Wegner, Hans

(57) **Abstract**

Method (100) for joining a sole element (210; 310) with an upper element (220; 320), comprising the steps of (a) operating (110) a positioning system to position the sole element (210; 310) and the upper element (220; 320) in a defined first position with respect to each other, (b) operating (120) the positioning system to position the sole element (210; 310) and the upper element (220; 320) in a second position for applying a joining agent to the sole element (210; 310) and / or the upper element and (c) joining (130) the sole element with the upper element (220; 320) by operating the positioning system to position the sole element (210; 310) in contact with the upper element (220; 320) in a third position of the positioning system, wherein the third position is defined with respect to the first position.

## Description

### 1. Technical field

The present invention relates to a method and an apparatus for joining a sole element with an upper element as well as to a shoe comprising such a sole element joined with an upper element.

### 2. Prior art

In the manufacture of sports shoes, it is often necessary to permanently join individual components of the sports shoe, e.g. a sole with an upper. One option is to mechanically join the components, for example by screwing or riveting the components. However, this may be disadvantageous, for example with respect to the look of the sports shoe, its weight and / or the durability or resilience of the joining.

A further possibility is to glue the components together. This option may have the disadvantage that gluing typically requires complex pretreatment of the components. It may be necessary, particularly in the case of plastic components, to first roughen and prime the surfaces of the components and to pre-dry the adhesive used for joining the components in an oven. In addition, adhesives used for the gluing of plastic components are often harmful to a worker and / or environmentally hazardous.

In particular for joining plastic components, various welding methods have been developed. For example, applicant disclosed in EP 3 053 471 A1 a method for the manufacture of sporting goods, in particular a shoe, wherein the method comprises the steps of providing a first component with a first connection surface and a second component with a second connection surface, activating at least one portion of the first connection surface by providing heat energy without contact, and connecting the first component with the second component by joining the first connection surface and the second connection surface.

Further prior art is disclosed in WO 99/56 578 A1 and DE 10 2015 202 014 A1.

However, a common disadvantage of the known methods is that the joining of the plastic components cannot be provided with sufficient quality in an accurate and reproducible manner. Moreover, many of the joining methods of the prior art involve a high amount of human labor, which makes the final product costly and also leads to undesired product deviations.

Therefore, the underlying problem of the present invention is to provide improved methods and apparatuses for joining a sole element with an upper element of a sports shoe in order to at least partly overcome some or all of the above mentioned deficiencies of the prior art.

### 3 Summary of the invention

The above mentioned problem is at least partially solved by a method for joining a sole element with an upper element, comprising the following steps: (a) operating a positioning system to position the sole element and the upper element in a defined first position with respect to each other; (b) operating the positioning system to position the sole element and the upper element in a second position for applying a joining agent to the sole element and / or the upper element and (c) joining the sole element with the upper element by operating the positioning system to position the sole element in contact with the upper element in a third position of the positioning system, wherein the third position is defined with respect to the first position.

Whereas in the prior art mentioned above joining a sole element with an upper element, for example a midsole with an upper for a sports shoe, is carried out simply by providing heat energy to the surface of the elements and joining them immediately afterwards, the present invention is based on a different approach: Here, in a first step, a positioning system may be operated to position the sole element and the upper element in a defined first position with respect to each other. Such a defined first position may be determined and thus used as a reference so that different parameters may be based thereon for the further method steps, e.g. a contact force or a pressure to be applied by the positioning system for joining the sole element with the upper element.

It is to be noted that after the defined first position has been reached there may be more than one joining step, for example if a number of essentially identical sole elements and upper elements are to be joined.

By operating the positioning system in the third position, which is defined with respect to the first position, so that the sole element and the upper element are in contact with each other, a more accurate and reliable interconnection between the sole element and the upper element may be achieved. The joining agent, for example heat, may soften or in another way modify at least a part of the sole element and / or the upper element. The third position, which is defined with respect to the first position and wherein the two elements are joined to each other, compensates for such a softening or other changes of the elements and thus assures an improved joining process. At the same time, it facilitates an automation of the joining process. Therefore, the whole manufacturing process of the sports shoe may become more efficient.

Another benefit is that the inventive method enables a welding of multiple shoes in one production cycle. The method is easily adaptable to soles which are different in size and/or shape.

For defining the first positon and consequently the third position, the remaining distances between a center of the sole element and a center of the upper element may, for example, be measured. Since the position of the sole element and the upper element will never fully coincide during and after joining the two elements, such distances allow a reproducible definition of the first and third position. Other measurements are conceivable as well, for example the remaining distance between a lower side of the sole element and an upper edge of the upper element. In other embodiments, the first and / or the third position may also be indirectly measured or defined, for example, by reaching a certain contact force between the two elements or by observing a certain amount of deformation of one or both elements.

In some embodiments, the defined first position may be determined without contact of the sole element and the upper element. Moreover, the defined first position may be determined by an ultrasonic method and / or 3D scanning method. Such embodiments may scan the external shape of the sole element for defining the first position without moving the two elements so that the automation of the manufacturing process of the sports shoe may be facilitated.

In some embodiments, the defined first position may be determined by a contact between the sole element and the upper element. Moreover, the positioning system may apply in the defined first position a predefined contact force between the sole element and the upper element. Furthermore, the predefined contact force may be less than a maximum contact force available from the positioning system. Thus, the apparatus for the joining process may be able to provide additional contact force, which may be necessary to reach the third position after the activation of the joining agent and which assures a reliable joining.

In some embodiments, the joining agent may soften a contacting surface of the sole element and / or the upper element. The joining agent may comprise heat. Softening the sole element and / or the upper element may provide the possibility that a tight bond between at least a portion of the sole element and at least a portion of the upper element may be formed, e.g. a chemical bond and / or a mechanical bond. What kind of bond is formed and how stable this bond is will for example depend on the amount of heat energy provided, the temperature the contacting surface is heated to, the degree of activation, the materials involved, the kind of post-processing or curing, and so forth. As a result, sports shoes comprising sole elements reliably joined with upper elements may be provided.

In some embodiments, the heat may be provided by a heat source inserted between the sole element and the upper element after step b. Such an inserting of the heat source between the two elements may further simplify the process as both elements may be heated up simultaneously. For example, the sole element may be arranged below the heat source and the upper element may be arranged above the heat source and vice versa. It is also conceivable that the sole element may be arranged on the left of the heat source and the upper element may be arranged on the right side of the heat source and vice versa. However, in all of these embodiments, the footprint of an apparatus for performing the described method may be reduced as only a single heat source may be needed.

The joining agent may comprise an infrared heat source. An infrared heat source may provide different wavelengths, for example: near-infrared, short-wavelength infrared, mid-wavelength infrared, long-wavelength infrared and far-infrared, wherein the specific wavelength to be used can be adapted depending on the materials of the two components to be joined. An advantage of using infrared radiation is thus that it is easy to produce and to apply to the sole and upper element. The amount of heat energy provided to a surface by infrared radiation may, for example, be controlled by adjusting the output power of the source, the intensity of the radiation, the size or emitted wavelength of the infrared heat source, the distances of the source to the surface, the view factor of the surface, i.e. how much of the emitted energy the target surface receives, or the emissivity of the surface material, etc. Moreover, the use of infrared radiation does not impose any particular requirements, such as electrical conductivity, on the material of the two elements. It is therefore particularly suited for joining plastic components.

In some embodiments, the defined first position and the third position may differ by a distance of o.1 mm - 5 mm, preferably 0.5 mm - 2 mm. The inventors have found that such values for the difference between the defined first and third position may provide a good comprise between an unintended joining of some portions of the sole element with the upper element, which would then later be visible, and a sufficient contact force to reliably join the sole element with the upper element.

In some embodiments, the positioning system may comprise one or more of the following positioning elements: a base plate supporting the sole element; a lateral clamping mechanism to hold the sole element at least on two opposite sides; and a holding arm supporting the upper element. All of these embodiments follow the same idea of providing a more stable way for securing the sole element and the upper element. For example, the sole element may be arranged on the base plate and the lateral clamping mechanism may hold it on its lateral side and its medial side so that the occurring forces during the joining process may be distributed uniformly.

Moreover, the holding arm supporting the portion of the upper element provides the possibility that the upper element may be moved reliably between the various positions so that the automation of the overall process may be further improved.

In some embodiments, the positioning system may comprise a moveable lateral clamping mechanism adapted to laterally compress the sole element before step (a) and / or step (c). Moreover, the positioning system may comprise a holding arm having an end with a last around which the upper element is arranged. These embodiments follow the same idea as mentioned above of providing a further improvement of the automation of the joining process. By using a moveable lateral clamping mechanism to laterally compress the sole element before step (a) and/or step (c), the sole element may be better secured during the positioning in the defined first position as reference position. Moreover, the sole element may be slightly deformed by the pressure of the lateral clamping mechanism so that the sole element may bend slightly convex towards the upper element which may be beneficial for the joined process. Alternatively or additionally, the sole element may also be better secured during the contact during the actual joining process. As a result, the joining process of the sole element with the upper element may be carried out in a more accurate and thus reproducible manner.

The method may further comprise the step of providing a cover element adapted to cover a portion of the sole element prior to joining the sole element and the upper element. The cover element may protect visible portions of the sole element, e.g. the boundary portion, during step of applying the joining agent to the sole element and/or the upper. Similarly, the cover element may also protect portions of the upper element,

In some embodiments, the sole element may comprise a midsole, preferably a midsole comprising expanded thermoplastic polyurethane, eTPU. Moreover, the upper element may comprise an upper of a shoe.

In one embodiment, the method further comprises the step of joining a further sole element with a further upper element by operating the positioning system to position the further sole element and the further upper element in the third position of the positioning system. As a result, a whole process of joining a plurality of sole elements with a plurality of upper elements may be provided with the above mentioned advantages.

According to another aspect, the present invention relates to a shoe comprising a sole element and an upper element, wherein the sole element and the upper element have been joined by a method according to the invention. Such a shoe will have superior quality in that there is no delamination of the sole from the upper.

According to still another aspect, the present invention relates to an apparatus for joining a sole element with an upper element comprising a positioning system, wherein the positioning system comprises (a) means for positioning the sole element and the upper element in a defined first position with respect to each other, (b) means for operating the sole element and the upper element in a second position for applying a joining agent to the sole element and / or the upper element and (c) means for joining the sole element with the upper element by positioning the sole element and the upper element in a third position of the positioning system, wherein the third position is defined with respect to the first position. Moreover, the apparatus may be further adapted to perform any of the methods according to the invention as mentioned above.

### 4. Short description of the figures

Possible embodiments of the present invention are further described in the following detailed description, with reference to the following figures, wherein:
- Fig. 1:: presents a flow diagram illustrating exemplary method steps for joining a sole element with an upper element according to an embodiment of the present invention;
- Fig. 2:: presents a schematic presentation of an embodiment of the present invention for joining a sole element with an upper element; and
- Fig. 3a:: presents a top view of a moveable lateral clamping mechanism compressing laterally a midsole comprising expanded thermoplastic polyurethane in an embodiment of the present invention;
- Fig. 3b:: presents a top view of an optional cover element for covering a portion of the midsole; and
- Fig. 3c:: presents a side view of a positioning system comprising a holding arm having an end with a last around which an upper is arranged over a heat source.

### 5. Detailed description of possible embodiments

Possible embodiments and variations of the present invention are described in the following with particular reference to a sole element and an upper element, in particular for a sports shoe. However, the concept of the present invention may identically or similarly be applied to any sporting goods such as shirts, pants or sports equipment such as a ball, racket, etc. wherein different components are joined to each other by joining methods, for example bonding, curing, welding, etc.

It is also to be noted that individual embodiments of the invention are described in greater detail below. However, it is clear to the person skilled in the art that the design possibilities and optional features described in relation to these specific embodiments can be further modified and combined with one another in a different manner within the scope of the present invention and that individual steps or features can also be omitted where they appear to be unnecessary. In order to avoid redundancies, reference is made to the explanations in the previous sections, which also apply to the following detailed description.

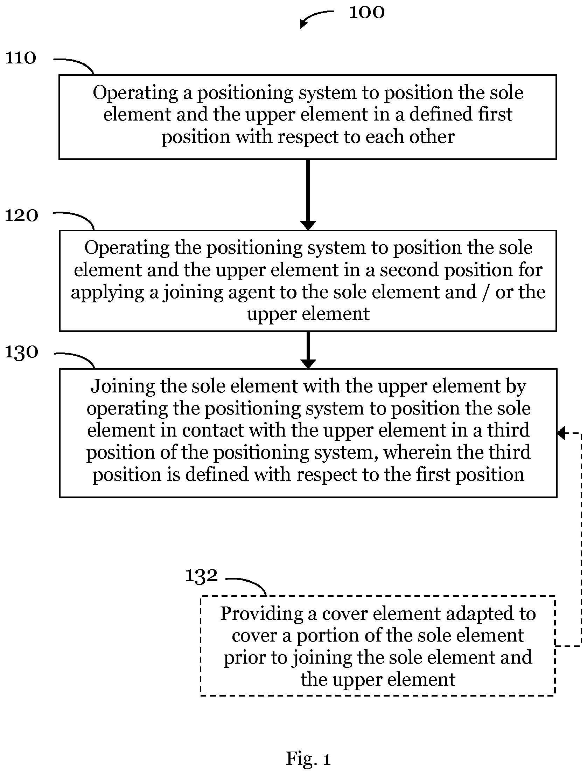

Fig. 1 presents a flow diagram illustrating exemplary method steps 100 for joining a sole element with an upper element in accordance with the present disclosure. The method steps 100 may be performed, for example, by one or more units which may be part of one or more manufacturing entities. The method steps 100 may begin at step 110 with operating a positioning system to position the sole element and the upper element in a defined first position with respect to each other. For example, the defined first position may be determined without contact of the sole element and the upper element such as by an ultrasonic method and / or 3D scanning method. Alternatively or additionally, the defined first position may be determined by a contact between the sole element and the upper element. For example, the positioning system may apply in the first position a predefined contact force between the sole element and the upper element, wherein the predefined contact force may be less than the maximum contact force available from the positioning system.

In one embodiment, the sole element may comprise a midsole, preferably a midsole comprising expanded thermoplastic polyurethane, eTPU, and the upper element may comprise an upper of a shoe.

The method 100 continues with a step 120 of operating the positioning system to position the sole element and the upper element in a second position for applying a joining agent to the sole element and / or the upper element. For example, the joining agent may comprise heat from an infrared heat source which may be inserted between the sole element and the upper element after the separating step 120. Thus, the heat from the infrared heat source may soften and thus activate a contacting surface of the sole element and / or the upper element. If the contacting surface of at least one of the two elements may comprise a material that becomes adhesive when subjected to a certain amount of infrared heat energy or a material that enters into a chemical reaction with a material of the surface of the other element when heated above a certain activation temperature. Such materials can have the advantage that they are easily handled when not activated and only become adhesive / reactive selectively upon activation.

Method 100 continues with a step 130 of joining the sole element with the upper element by operating the positioning system to position the sole element in contact with the upper element in a third position of the positioning system, wherein the third position is defined with respect to the first position. For example, the defined first and third position may differ by a distance of o.1 mm - 5 mm, preferably 0.5 mm - 2 mm. Joining the sole element with the upper element may further comprise forming a bond between at least one portion of the surface of the sole element and at least one portion of the surface of the upper element. The bond may comprise a chemical bond and / or a mechanical bond. What kind of bond is formed and how stable this bond is will for example depend on the amount of heat energy provided, the temperature of the surface of the sole element is heated to, the degree of activation, the materials involved, the kind of post-processing or curing, and so forth. It is also conceivable to use other methods in order to achieve a bonding between the sole element and the upper element such as: gluing, welding, high frequency welding, ultrasonic welding, laser welding, crimping, sewing, screwing, riveting, fusing, clipping, sealing, subjecting to a heat pressure treatment, exposing to a steam treatment.

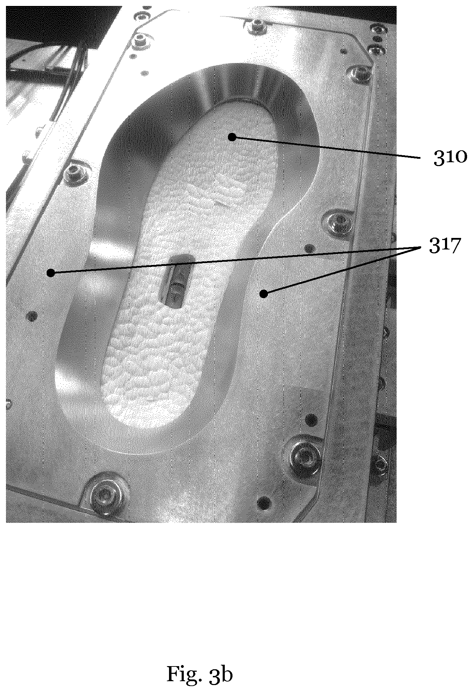

As shown in Fig. 1, step 130 may comprise a step 132 of providing a cover element adapted to cover a portion of the sole element prior to joining the sole element and the upper element. A possible cover element is shown in Fig. 3b.

Some or all of the above method steps may be carried out automatically in order to make the manufacture of sports shoes more efficient. In fact, the described method may be integrated into a fully automated manufacture of sports shoes.

The method 100 reduces the overall process time for joining a sole element with an upper element in a reproducible manner, wherein the sole element joined with upper element will be manufactured to a sports shoe having extraordinary quality.

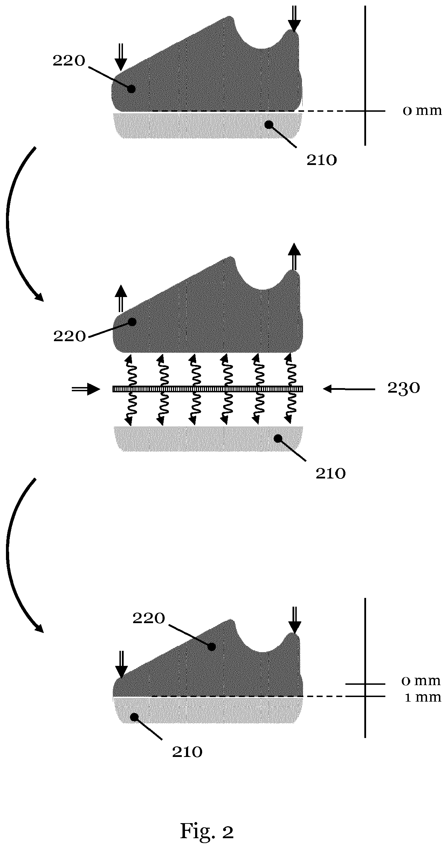

Fig. 2 presents a schematic presentation of an embodiment of the present invention for joining a sole element 210 with an upper element 220. The steps shown in Fig. 2 may correspond to one or more method steps of the flowchart as shown in Fig. **1****.**

Corresponding to method step 110, a defined first position may be determined, e.g. by a determining entity of the positioning system, by a contact between the sole element 210 and the upper element 220 by operating a positioning system to position the two elements (as indicated by the two double line arrows), for example by two electrical cylinders (not shown). The determining entity may use one or more reference points on the sole element and the upper element or any support of the respective element to determine the defined first position (not shown in Fig. 2). For example, center points may be marked on the side of the upper element and on the side of the sole element and the remaining distances between the two center points may be used to measure the distance of the two elements. The measurement of the distances such as of the two elements to each other may be done via a servo motor with integrated path measurement (e.g. by using angled desks or measuring directly on a rack).

In one embodiment, a quick response (QR) code may be printed onto the sole element 210 so that different information about the sole element 210 (e.g. material properties, shape, density, melting temperature, etc.) may be obtained by reading the QR code and the defined first position of the positioning system may be determined based thereon. A means for reading the QR code may be included in the determining entity. It is also conceivable that any other code may be used such as UPC code, Micro QR code, Secure QR-code, iQR-Code or Frame QR, etc.

The defined first position of the positioning system may be used as a reference position (as indicated by the dashed line) and may be set to some reference value, e.g. o mm as indicated on the right scale. The positioning system may, for example, define the first position as a position, wherein a predefined contact force between the sole element 210 and the upper element 220 is achieved. The contact force may be measured via the motor power by using an external load cell. In the described embodiment, the predefined contact force may be less than the maximum contact force available from the positioning system. This provides the possibility to further increase the contact force during the further steps of the described method as explained below.

Corresponding to method step 120, the sole element 210 and the upper element 220 are then operated in a second position (as indicated by the two vertical double line arrows in the middle of Fig. 2), so that a heat source 230 such as an infrared heat source may be inserted (as indicated by the horizontal double line arrow) between the sole element 210 and the upper element 220. The infrared heat source 230 may heat and thus soften the contacting surfaces of the sole element 210 and the upper element 220.

Corresponding to method step 130, the sole element 210 may be positioned in contact with the upper element 220 by operating the positioning system (as indicated by the two double line arrows) in a third position. The third position of the sole element 210 and the upper element 220 is defined with respect to the first position. Thus, the sole element 210 is reliably joined with the upper element 220. The first and third position may differ by a distance of 0.1 mm - 5 mm, preferably 0.5 mm - 2 mm, for example by 1 mm. This means, for example, that parts of the positioning system, for example the two electrical cylinders, may be elongated by 1 mm more than the defined first position as reference position in order to provide more contact force. Such a difference of two positions between the sole element 210 in the upper element 220 may provide enough pressure to join the two elements after one or both of them have been subject to the heat treatment of the infrared source 230 or some other kind of activation. It is also conceivable that other differences between the first and the third position may be used for providing other pressures depending on the material properties of the two elements.

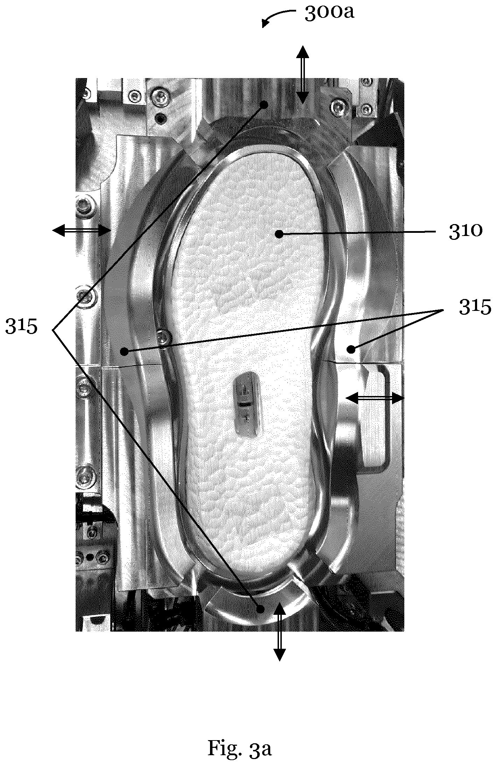

Figs. 3a - c present different positioning elements 300a - c of a positioning system which may be involved in a method according to the present invention as mentioned above.

Fig. 3a presents a top view of a moveable clamping mechanism 300a comprising two pairs of opposite brackets 315 that laterally compress a midsole 310, for example before step 110 and / or step 130. In Fig. 3a, the brackets 315 are in an open configuration and the midsole 310 is a left foot midsole. Moreover, the brackets 315 may compress the midsole 310 to a geometry, e.g. its CAD-geometry shape, and / or may press its sidewalls onto an upper element (not shown in Fig. 3a) to enable a better bonding between the midsole 310 and the upper element. Furthermore, the midsole 310 may comprise expanded thermoplastic polyurethane.

In one embodiment, the positioning system may comprise a base plate supporting the midsole 310 which is not shown but would be therefore below the midsole 310 in Fig. 3a.

Moreover, the movable clamping mechanism 300a may be equipped with six mechanical sliders (below the brackets 315 and thus not shown in Fig. 3a) which may be made from aluminum or other sufficiently stable materials. Additionally or alternatively, the six mechanical sliders may be mounted on an adapter plate between the brackets and the sliders. It is also conceivable that at least one changeable bracket may be included into the movable clamping mechanism 300a for switching easily between different sizes and sides of the midsoles to be joined with the upper.

In one embodiment, the brackets 315 may be manufactured by an additive manufacturing method. Additionally or alternatively, the brackets 315 may comprise aluminum or other suitable metals.

Fig. 3b presents a top view of a cover element 317 covering a portion of the midsole 310. The cover element 317 may be adapted to cover a portion of the midsole 310 prior to joining the midsole 310 and an upper element (not shown in Fig. 3b). As mentioned above, the cover element 317 may protect visible portions of the midsole 310 such as a boundary portion during the step of applying the heat from the infrared heat source to the midsole 310. Thus, an undesired dissipation of the infrared heat in other parts of the midsole 310 can be avoided or at least limited. By contrast, the portions not covered by the cover element 317 may be subject to the infrared heat so that the midsole 310 may be joined with the upper element as explained above.

In one embodiment, the cover element 317 may be manufactured by an additive manufacturing method. Additionally or alternatively, the cover element may comprise aluminum of other suitable metals.

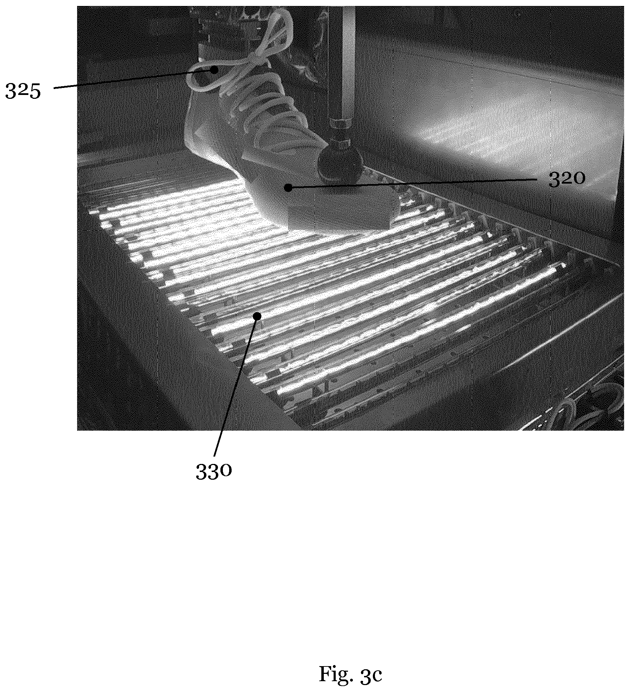

Fig. 3c presents a side view of the positioning system comprising a holding arm 325 having an end with a last around which an upper element 320, for example an upper for a shoe, may be arranged over an infrared heat source 330. Below the infrared heat source 330 the movable clamping mechanism 315 and the cover element 317 may be arranged (not shown in Fig. 3c). As shown in Fig. 3c, the entire bottom surface of the upper 320 may be irradiated by the infrared heat source 330, but is it also conceivable that only certain portions of the bottom surface of the upper 320 may be irradiated.

As can be seen in Fig. 3c, the infrared heat source 330 may comprise a plurality of elongated heater elements which may be arranged perpendicular to the longitudinal axis of the upper 320. It is also conceivable to arrange the elongated heater elements parallel to the longitudinal axis of the upper 320 and / or with another direction having a suitable angle to the longitudinal axis of the upper 320. Moreover, it is also possible that the heater elements may comprise a round shape, a rectangular shape or a helical shape.

In the following, further embodiments are described to facilitate the understanding of the invention:
**1.** A method (100) for joining a sole element (210; 310) with an upper element (220; 320), the method comprising the following steps:
   a. Operating (110) a positioning system to position the sole element (210; 310) and the upper element (220; 320) in a defined first position with respect to each other;
   b. Operating (120) the positioning system to position the sole element (210; 310) and the upper element (220; 320) in a second position for applying a joining agent to the sole element (210; 310) and / or the upper element; and
   c. Joining (130) the sole element with the upper element (220; 320) by operating the positioning system to position the sole element (210; 310) in contact with the upper element (220; 320) in a third position of the positioning system, wherein the third position is defined with respect to the first position.
**2.** The method (100) of embodiment 1, wherein the defined first position is determined without contact of the sole element and the upper element.
3. The method (100) of embodiment 2, wherein the defined first position is determined by an ultrasonic method and / or 3D scanning method.
**4.** The method (100) of embodiment 1, wherein the defined first position is determined by a contact between the sole element (210; 310) and the upper element (220; 320).
**5.** The method (100) of embodiment 4, wherein the positioning system applies in the defined first position a predefined contact force between the sole element (210; 310) and the upper element.
6. The method (100) of embodiment 5, wherein the predefined contact force is less than a maximum contact force available from the positioning system.
7. The method (100) of any of the preceding embodiments, wherein the joining agent softens a contacting surface of the sole element (210; 310) and / or the upper element (220; 320).
8. The method (100) of any of the preceding embodiments, wherein the joining agent comprises heat.
9. The method (100) of the embodiment 8, wherein the heat is provided by a heat source (230; 330) inserted between the sole element (210; 310) and the upper element (220; 320) after step b.
10. The method (100) of any of the preceding embodiments, wherein the joining agent comprises an infrared heat source.
11. The method (100) of one of the embodiments 4 - 10, wherein the defined first position and the third position differ by a distance of 0.1 mm - 5 mm, preferably 0.5 mm - 2 mm.
12. The method (100) of any of the preceding embodiments, wherein the positioning system comprises one or more of the following positioning elements:
   - a base plate supporting the sole element (210; 310);
   - a lateral clamping mechanism to hold the sole element (210; 310) at least on two opposite sides; and
   - a holding arm (325) supporting the portion of the upper element (220; 320).
13. The method (100) of embodiment 12, wherein the positioning system comprises a moveable lateral clamping mechanism (315) adapted to laterally compress the sole element (210; 310) before step a. and / or step c.
14. The method (100) of embodiment 12 or 13, wherein the positioning system comprises a holding arm (325) having an end with a last around which the upper element (220; 320) is arranged.
15. The method (100) of one of the embodiments 12 - 14, further comprising the step of providing (132) a cover element (317) adapted to cover a portion of the sole element (210; 310) prior to joining the sole element (210; 310) and the upper element (220; 320).
16. The method (100) of any of the preceding embodiments, wherein the sole element (210; 310) comprises a midsole (310), preferably a midsole comprising expanded thermoplastic polyurethane, eTPU.
17. The method (100) of any of the preceding embodiments, wherein the upper element (220; 320) comprises an upper of a shoe.
18. The method (100) of any of the preceding embodiments, further comprising the step of:
   Joining a further sole element with a further upper element (220; 320) by operating the positioning system to position the further sole element and the further upper element (220; 320) in the third position of the positioning system.
19. Shoe comprising a sole element with an upper element, wherein the sole element and the upper element (220; 320) have been joined by a method of any of the preceding embodiments.
20. Apparatus for joining a sole element and an upper element (220; 320) comprising a positioning system, wherein the positioning system comprises
   a. means for positioning the sole element (210; 310) and the upper element (220; 320) in a defined first position with respect to each other;
   b. means for operating the sole element (210; 310) and the upper element (220; 320) in a second position for applying a joining agent to the sole element (210; 310) and / or the upper element (220; 320); and
   c. means for joining the sole element (210; 310) with the upper element (220; 320) by positioning the sole element (210; 310) and the upper element (220; 320) in a third position of the positioning system, wherein the third position is defined with respect to the first position.
21. Apparatus according to embodiment 20, wherein the apparatus is further adapted to perform a method of one of the embodiments 1 - 8.

## Claims

1. A method (100) for joining a sole element (210; 310) with an upper element (220; 320), the method comprising the following steps:
a. Operating (110) a positioning system to position the sole element (210; 310) and the upper element (220; 320) in a defined first position with respect to each other;
b. Operating (120) the positioning system to position the sole element (210; 310) and the upper element (220; 320) in a second position for applying a joining agent to the sole element (210; 310) and / or the upper element; and
c. Joining (130) the sole element with the upper element (220; 320) by operating the positioning system to position the sole element (210; 310) in contact with the upper element (220; 320) in a third position of the positioning system, wherein the third position is defined with respect to the first position.

2. The method (100) of claim 1, wherein the defined first position is determined without contact of the sole element and the upper element.

3. The method (100) of claim 2, wherein the defined first position is determined by an ultrasonic method and / or 3D scanning method.

4. The method (100) of claim 1, wherein the defined first position is determined by a contact between the sole element (210; 310) and the upper element (220; 320).

5. The method (100) of claim 4, wherein the defined first position and the third position differ by a distance of 0.1 mm - 5 mm, preferably 0.5 mm - 2 mm.

6. The method (100) of any of the preceding claims, wherein the positioning system comprises one or more of the following positioning elements:
- a base plate supporting the sole element (210; 310);
- a lateral clamping mechanism to hold the sole element (210; 310) at least on two opposite sides; and
- a holding arm (325) supporting the portion of the upper element (220; 320).

7. The method (100) of claim 6, wherein the positioning system comprises a moveable lateral clamping mechanism (315) adapted to laterally compress the sole element (210; 310) before step a. and / or step c.

8. The method (100) of claim 6 or 7, wherein the positioning system comprises a holding arm (325) having an end with a last around which the upper element (220; 320) is arranged.

9. The method (100) of one of the claims 6 - 8, further comprising the step of providing (132) a cover element (317) adapted to cover a portion of the sole element (210; 310) prior to joining the sole element (210; 310) and the upper element (220; 320).

10. The method (100) of any of the preceding claims, wherein the sole element (210; 310) comprises a midsole (310), preferably a midsole comprising expanded thermoplastic polyurethane, eTPU.

11. The method (100) of any of the preceding claims, wherein the upper element (220; 320) comprises an upper of a shoe.

12. The method (100) of any of the preceding claims, further comprising the step of: Joining a further sole element with a further upper element (220; 320) by operating the positioning system to position the further sole element and the further upper element (220; 320) in the third position of the positioning system.

13. Shoe comprising a sole element with an upper element, wherein the sole element and the upper element (220; 320) have been joined by a method of any of the preceding claims.

14. Apparatus for joining a sole element and an upper element (220; 320) comprising a positioning system, wherein the positioning system comprises
a. means for positioning the sole element (210; 310) and the upper element (220; 320) in a defined first position with respect to each other;
b. means for operating the sole element (210; 310) and the upper element (220; 320) in a second position for applying a joining agent to the sole element (210; 310) and / or the upper element (220; 320); and
c. means for joining the sole element (210; 310) with the upper element (220; 320) by positioning the sole element (210; 310) and the upper element (220; 320) in a third position of the positioning system, wherein the third position is defined with respect to the first position.

15. Apparatus according to claim 14, wherein the apparatus is further adapted to perform a method of one of the claims 1 - 12.
